Europäisches Patentamt

European Patent Office

Office européen des brevets

(11) Veröffentlichungsnummer: **0 417 495 A2**

# EUROPÄISCHE PATENTANMELDUNG

(21) Anmeldenummer: 90115631.5

(51) Int. Cl.5: **F16J 15/08**

(22) Anmeldetag: 16.08.90

(30) Priorität: 09.09.89 DE 3930117

(43) Veröffentlichungstag der Anmeldung:
20.03.91 Patentblatt 91/12

(84) Benannte Vertragsstaaten:
DE FR GB IT

(71) Anmelder: **GOETZE AG**
**Bürgermeister-Schmidt-Strasse 17**
**W-5093 Burscheid 1(DE)**

(72) Erfinder: **Klein, Bernhard, Dipl.-Ing.**
**Rosenweg 8**
**W-5068 Odenthal-Blecher(DE)**

(54) Metallische Flachdichtung, insbesondere Zylinderkopfdichtung.

(57) Bei metallischen Flachdichtungen, wie insbesondere Zylinderkopfdichtungen für Verbrennungskraftmaschinen, sind die die Flüssigkeitsöffnungen bildenden Weichstoffeinsätze durch auf der metallischen Dichtungsplatte aufliegende und an der Metallplatte und/oder den Randzonen der Weichstoffeinsätze befestigte, bevorzugt dünne Metallbleche an der metallischen Dichtungsplatte transportsicher und funktionssicher gebunden, wobei gleichzeitig die aufliegenden Metallbleche an den Brennraumöffnungsrändern zur besseren Abdichtwirkung und zur Verminderung des Übertrittes von zerstörenden Schleichgasen durch Sickungen und/oder Umfalzungen profiliert sind.

FIG. 2

EP 0 417 495 A2

## METALLISCHE, FLACHDICHTUNG, INSBESONDERE ZYLINDERKOPFDICHTUNG

Die Erfindung betrifft eine metallische Flach-dichtung, wie insbesondere eine Zylinderkopfdich-tung für Verbrennungskraftmaschinen, mit einer Metallblechplatte mit Durchgangsöffnungen für die Brennräume, die Befestigungsschrauben, die Kühlflüsigkeiten und das Schmieröl, bei der mindestens eine der Flüssigkeitsöffnungen durch einen Einsatz aus Weichstoffmaterial gebildet ist.

Zylinderkopfdichtungen für Verbrennungskraftmaschinen aus bevorzugt aus Stahl bestehenden Metallblechen mit gegebenenfalls polymeren Überzügen oder Auflagen auf den Dichtflächen und ringförmig die Öffnungen umgebenden Sicken werden vor allem wegen ihrer guten Temperaturbeständigkeit und Druckfestigkeit in Dieselmotoren mit hohen Drehzahlen und hohen Mitteldrücken eingesetzt. Nachteilig ist die geringe plastische Verformbarkeit der Metallbleche unter dem Dichtpressungsdruck, so daß vielfach aufgrund der schlechten Anpassungsfähigkeit an die Dichtflächen die Abdichtung an den Flüssigkeitsöffnungen nicht voll befriedigend ausreicht. Deshalb werden in die Flüssigkeitsoffnungen meist Weichstoffeinsatzringe eingesetzt, oder nach der DE-PS 26 44 371 werden in mehrere Flüssigkeitsöffnungen umfassende Bereiche Einsätze aus Weichstoffmaterial, wie bevorzugt aus metallisch verstärktem Fa-servliesmaterial, eingesetzt. Diese Dichtungen dich-ten dann auch an den kritischen Flüssigkeitsöffnungen mit ausreichender Verformung und Anpassung an die Dichtflächen mit befriedigender Abdichtgüte ab.

Problematisch ist die haftfeste Verbindung des Weichstoffeinsatzes mit der Metallplatte sowohl für den Transport und die Lagerung als auch für die Funktion im motorischen Betrieb. Unter Betriebsbedingungen können am durch das nur schwer verformbare Metallblech schwach abgedichteten Brennraumöffnungsrand Verbrennungsgase austreten und können die üblicherweise verwendete Klebeverbindung zwischen Weichstoff und Metall zerstören und schließlich die gesamte Dichtung funktionsunfähig machen.

Der vorliegenden Erfindung liegt daher die Aufgabe zugrunde, eine Flachdichtung gemäß Oberbegriff des Hauptpatentanspruches zu schaffen, bei der mit einfachsten Mitteln die Weichstoffeinsätze funktionssicher an der metallischen Dichtungsplatte befestigt sind.

Erfindungsgemäß wird diese Aufgabe durch eine metallische Flachdichtung gelöst, deren Weichstoffeinsätze durch beidseitig auf der metallischen Dichtungsplatte und auf Randzonen auf den Weichstoffeinsätzen aufliegende und mit dem Dichtungsblech und/oder den Weichstoffeinsätzen kraftschlüssig verbundene Metallbleche befestigt sind. Die bevorzugt eingesetzten Metallbleche haben eine geringe Dicke, und ihre Dicke liegt zwischen etwa einem Zwanzigstel und einem Fünftel der metallischen Dichtungsplatte, so daß bei einer bevorzugten Dichtungsplattendicke zwischen 0,5 und 2 mm die Dicke der aufliegenden Metallbleche entsprechend zwischen 0,1 und maximal 0,4 mm liegt. Die Weichstoffeinsätze selbst bestehen dabei bevorzugt aus einem metallisch verstärkten Faservliesmaterial, sie können im Sinne der Erfindung aber auch aus anderen Werkstoffen, wie Elastomer- oder Kunststoffplatten, bestehen.

Zur Befestigung der Weichstoffeinsätze beim Zusammenbau der einbaufähigen Flachdichtung brauchen jetzt nur noch die Einsätze aus Weichstoff in die entsprechend ausgestanzten Bereiche der metallischen Dichtungsplatte eingesetzt, die dünnen Metallbleche auf die metallische Dichtungsplatte beidseitig aufgelegt und an dieser und/oder dem Weichstoffeinsatz kraftschlüssig befestigt zu werden. Bevorzugt werden dabei die dünnen Me-tallbleche durch Umbördeln an Durchgangsöffnun-gen und/oder den Dichtungsrändern oder durch Nietung, Lötung, Schweißung oder dergleichen an der metallischen Dichtungsplatte befestigt, und zur Befestigung des Weichstoffeinsatzes kann dieser im Randbereich beispielsweise durch Verstemmen mit den dünnen Metallblechen verbunden werden. Die Verbindung des Weichstoffeinsatzes mit der metallischen Dichtungsplatte ist dann klebstofffrei, und Zerstörungen durch heiße Brenngase oder durch Abdichtmedien können nicht mehr auftreten.

Zur besseren Abdichtung und zur Vermeidung des Übertretens sowohl heißer Verbrennungsgase als auch von Schleichgasen an den Brennraumöffnungen können die bevorzugt ganzflächig auf der metallischen Dichtungsplatte aufliegenden dünnen Metallbleche an den Brennraumöffnungen gesickt oder es können die Öffnungsränder ein- oder mehrfach umgefalzt sein. Dadurch bilden sich pro-filartige Erhebungen mit stärkerer Dichtpressungs-aufnahme bei der Montage, so daß bei verbesserter Abdichtung am Brennraum die Gefahr von Schleichgasübertritten mit ihren nachteiligen Folgen verringert wird. Zur besseren Elastizität und damit zur besseren Abdichtung der aufliegenden dünnen Metallbleche können diese aus Federstahl bestehen, während die metallische Dichtungsplatte selbst aus einem normalen, nicht vergüteten Stahl bestehen kann. Die aufliegenden Metallbleche können zusätzlich zur besseren Mikro- und Makroabdichtung mit Überzügen aus bevorzugt einem dünn aufgetragenen Elastomer versehen sein, wobei die Überzüge ganz- oder teilflächig aufgetragen sein und dabei gleichzeitig auch vorteilhaft einen Korrosionsschutz bilden können.

Durch die Erfindung ist somit eine Flachdichtung geschaffen, deren Weichstoffeinsätze mit relativ einfachen Mitteln funktionssicher an der Dichtungsplatte befestigt sind. Während die verwendeten dünnen, auf der Dichtungsplatte aufliegenden Metallbleche bevorzugt ganzflächig die Dichtungsplatte bedecken, können im Sinne der Erfindung die aufliegenden Metallbleche die Dichtungsplatte auch nur teilflächig bedecken. Außer der bevorzugten Verwendung der erfindungsgemäßen Flachdichtung als Zylinderkopfdichtung für Verbrennungskraftmaschinen kann die erfindungsgemäße Flachdichtung auch an anderen Dichtstellen, wie bevorzugt als Auspuffflanschdichtung, eingesetzt werden.

Die drei Abbildungen verdeutlichen die Erfindung, und zwar zeigt

Figur 1 ein Aufsichtsbild auf eine erfindungsgemäße Zylinderkopfdichtung im Teilstück

Figur 2 ein Querschnittsbild der Zylinderkopfdichtung aus Figur 1 in der Linie II-II

Figur 3 ein weiteres Querschnittsbild der Zylinderkopfdichtung aus Figur 1 in der Linie II-II in einer weiteren Ausführungsvariante der Erfindung.

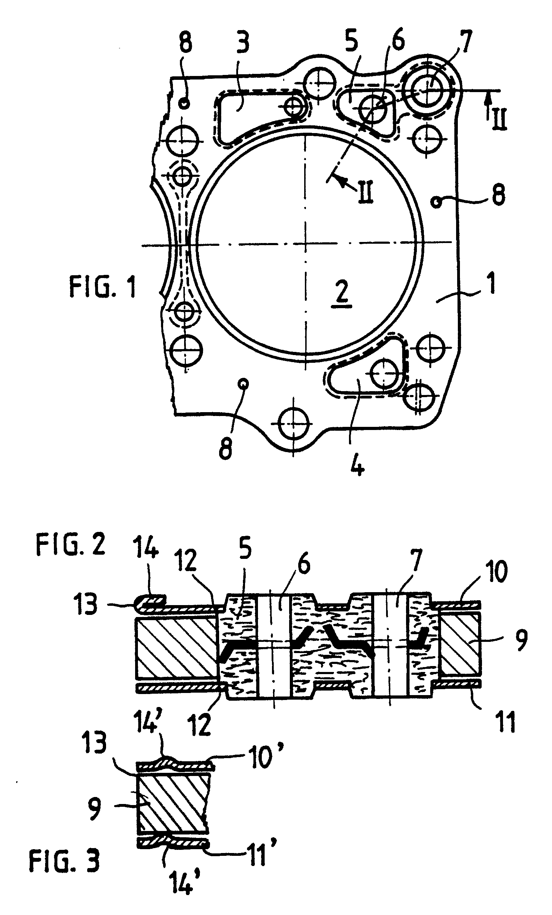

In Figur 1 ist 1 die Zylinderkopfdichtung mit einer Öffnung 2 für den Brennraum und den Weichstoffeinsätzen 3, 4, 5, die die Flüssigkeitsöffnungen für das Kühlmittel 6 und das Schmiermittel 7 bilden. Die aufliegenden dünnen Metallbleche sind am metallischen Trägerblech mit Nieten 8 verbunden.

Im Querschnittsbild der Figur 2 ist 9 die metallische Dichtungsplatte mit dem Weichstoffeinsatz 5 aus metallisch verstärktem Faservliesmaterial, das die Öffnungen für das Kühlmittel 6 und das Schmieröl 7 bildet. Die Dicke des Weichstoffeinsatzes 5 ist größer als die Dicke der Dichtungsplatte 9, so daß die beidseitig aufliegenden dünnen Metallbleche 10, 11 in ihren auf den Weichstoffeinsatz 5 überragenden Bereichen 12 mit dem Weichstoffeinsatz 5 durch Verstemmen kraftschlüssig verbunden sind. Die dünne aufliegende Metallblechplatte 10 ist am Brennraumöffnungsrand 13 einfach umgefalzt, so daß sie dort eine ringförmig die Öffnung 13 umgebende, profilartige Erhebung 14 mit verbesserter Abdichtwirkung zur Verhinderung des Übertretens heißer Brenngase bildet.

Im Querschnittsbild der Figur 3 sind die beiden auf der metallischen Dichtungsplatte 9 aufliegenden dünnen Metallbleche 10', 11' am Brennraumöffnungsrand 13 gesickt und bilden dort eine ringförmig die Öffnung 13 umgebende Zone 14' mit erhöhter Dichtpressung und Abdichtwirkung.

## Ansprüche

1. Metallische Flachdichtung, insbesondere Zylinderkopfdichtung für Verbrennungskraftmaschinen, mit einer metallischen Dichtungsplatte mit Durchgangsöffnungen für die Brennräume, die Befestigungsschrauben, die Kühlflüssigkeit und das Schmieröl, bei der mindestens eine der Flüssigkeitsöffnungen durch einen Einsatz aus Weichstoffmaterial gebildet ist, dadurch gekennzeichnet, daß die Weichstoffeinsätze (3, 4, 5) durch beidseitig auf der metallischen Dichtungsplatte (9) und auf den Randzonen (12) der Weichstoffeinsätze (3, 4, 5) aufliegende und mit der metallischen Dichtungsplatte (9) und/oder den Weichstoffeinsätzen (3, 4, 5) kraftschlüssig verbundene Metallbleche (10, 11) an der metallischen Dichtungsplatte (9) befestigt sind.

2. Metallische Flachdichtung nach Anspruch 1, dadurch gekennzeichnet, daß die Dicke der aufliegenden Metallbleche (10, 11) etwa gleich einem Fünftel bis einem Zwanzigstel der Dicke der metallischen Dichtungsplatte (9) beträgt.

3. Metallische Flachdichtung nach mindestens einem der Ansprüche 1 und 2, dadurch gekennzeichnet, daß die aufliegenden Metallbleche (10, 11) ganzflächig beidseitig auf der metallischen Dichtungsplatte (9) aufliegen, und daß die Randbereiche der aufliegenden Metallbleche (10, 11) an den Brennraumöffnungen (2) durch Sickungen (14') und/oder Umfalzungen (14) ein- oder beidseitig profiliert sind.

FIG. 1

8   3   5   6   7

II

II

2   1

8

8

4

FIG. 2   14   12   5   6   7   10

13   9

12   11

14'

13   10'

9   11'

FIG. 3   14'